# EUROPEAN PATENT SPECIFICATION

(11) **EP 2 962 825 B1**
(45) Date of publication and mention of the grant of the patent: **29.11.2017**
(21) Application number: 14425087.5
(22) Date of filing: 30.06.2014
(51) Int. Cl.: B29C 33/04, B29C 51/42, B29C 65/26, B65D 39/00, B29C 65/48, B29C 63/04, B29K 21/00, B29K 105/24

(54) **Apparatus and method for coupling and/or edge folding panels with hot glue activation**
Vorrichtung und Verfahren zur Kopplung und/oder Kantenfaltung von Tafeln durch Heißkleberaktivierung
Appareil et procédé pour le couplage et/ou pliage d'un bord de panneaux à l'activation de colle à chaud

(43) Date of publication of application: 06.01.2016
(73) Proprietor: Persico S.p.A., 24027 Nembro (BG) (IT)
(72) Inventor: Fumagalli, Giuseppe, 24045 Fara Gera D'Adda (BG) (IT); Gastaldi, Sergio, 12013 Chiusa DI Pesio (CN) (IT)
(74) Representative: Ferroni, Filippo

(56) References cited:
- EP-A1- 0 483 849
- EP-A1- 0 671 252
- EP-A2- 0 747 201
- DE-U1-202007 005 052
- US-A- 2 804 909
- US-A- 5 534 097
- US-A1- 2014 147 546

## Description

The present invention relates, in a general aspect thereof, to apparatus for coupling and/or edge folding of thermoformed panels with hot glue activation.

This is typically the case of apparatus used in the automotive industry for manufacturing some internal parts of cars, such as the front dashboard, parcel shelf, door panels, etc.

It is worth pointing out beforehand that the above-mentioned apparatus are also commonly known as moulds, and therefore in the following description this term will also be used to indicate the same element, unless otherwise specified or clarified in the context.

These panels are usually processed by hot or cold forming, or thermoforming, through the combined action of heat and pressure in suitable moulds.

The panels taken into consideration herein generally have a composite structure, i.e. comprising multiple superimposed layers and a main core, the thickness of which may vary from a few millimeters to a few centimeters, made from polymeric materials, preferably but not necessarily foam materials such as, for example, polyurethane, polyethylene or polystyrene foam, possibly charged with reinforcement materials such as natural or artificial fibres or the like. A coating layer is then applied onto the panel so formed, which gives the panel its final finish and appearance.

The coating layer is generally a sheet or laminated panel, and may be made of fabric, natural or synthetic leather, whether or not laminated with soft material or the like. The process of applying the coating onto the panels, or at least a part thereof such as the fixing step, is carried out by hot moulding, wherein the layer is fixed to the underlying panel surface by means of adhesives or resins: the latter are of the thermoactivable type and are activated when the mould reaches predetermined temperature conditions, solidifying as they cool down.

One important aspect of the panel moulding process considered herein concerns the thermal heating and cooling cycles of the panels.

It is in fact understandable that when a new semifinished piece has to be loaded onto the mould, the latter must be at ambient temperature or anyway at a temperature only slightly higher, so as to allow an operator to open the mould and manually remove the piece previously processed in the mould.

For the next panel coating step, which requires the activation of the adhesives and/or resins for fixing the above-mentioned laminated layer, the adhesives and/or resins must be heated up to their activation temperature, in accordance with the technical specifications of the material in use.

For thermally conditioning the moulds, i.e. heating and cooling the moulds during the various production steps, it is known to use a fluid (typically water, but it may be a different fluid), which is made to flow in channels extending in proximity to those areas of the mould that will contact the panels during the various moulding steps. One example of a mould for this moulding process is described in European patent applications EP 491682 and EP 747201; Fig. 1 annexed herein shows a drawing of the latter, even though it is worth mentioning that the principles of operation of the above-mentioned moulds are known in the art; therefore, for further details reference should be made, for brevity's sake, to the conspicuous technical and patent literature available on this matter.

Moulds are generally made up of two parts, also known as half-moulds, having a respective shaped surface with a male/female profile depending on the pieces to be coupled; the half-moulds are supported in a manner, such that they can be brought close to each other into the closed condition and moved away from each other into the open condition.

Half-moulds are made by using metal blocks (usually steel, aluminium or alloys thereof), which, depending on the parts to be produced, may have variable dimensions and weight. However, in automotive panel applications like those referred to herein, the weight of the moulds is generally of the order of one ton. Because of this, on the one hand they have a high thermal capacity, but on the other hand they require long heating and cooling cycles.

It follows that the total duration of the panel moulding process is unavordably lengthened by the times necessary for heating and cooling the blocks that constitute the moulds; this condition is made even worse when panels with a coating layer are involved, because the latter has different deformation characteristics than the rest of the panel, since it is made of a different material such as, for example, fabric, natural or synthetic leather, etc. Consequently, the differential deformation of the coating layer with respect to the underlying panel substrate, due to the different shrinkage thereof as it cools down, generates tensions that, especially in peripheral or concave regions, can lead to delamination, i.e. detachment of the coating from the underlying panel substrate.

In this context, it must be pointed out that the criticity of the peripheral and concave regions is also due to the fact that in such regions, because of the shape and thickness of the mould, it is often impossible to run normal straight channels for the flow of thermal conditioning liquid.

In particular, along the edges of the panel the coating layer is usually bent to create a coating area on both sides: as can be easily understood, should the fixing not be optimal a detachment will occur that may also jeopardize the fixing of the coating to the rest of the moulded panel.

Therefore, until the reticulation of the adhesives or resins used for fixing the coating (which are per se known polymeric materials) is not complete, it will not be possible to cool the mould in order to be able to open it and extract the piece.

On the other hand, as aforesaid, the mould cooling times are quite long, and therefore, in light of this situation, a need is felt for a coupling process wherein the mould heating and cooling times are reduced as much as possible. The technical problem underlying of the present invention is therefore to provide a mould that allows a reduction of its thermal conditioning times, i.e. its heating and cooling cycle times.

The idea for solving this problem is to provide a mould wherein the cooling circuit comprises portions extending in proximity to critical regions, such as, without being limited thereto, panel edges or concave parts, which can be supplied with fluid independently of the other mould parts.

In this manner, critical regions can be heated and cooled separately from the rest of the mould, thus requiring less time for their thermal conditioning.

The features of the mould according to the invention are specifically set out in the claims appended to the present description.

The invention further comprises a method for coupling panels, the features of which are also set out in the appended claims.

The features of the invention as a whole, as well as the effects and the advantages deriving therefrom, will become more apparent from the following description referring to a non-limiting preferred embodiment illustrated in the annexed drawings, wherein:

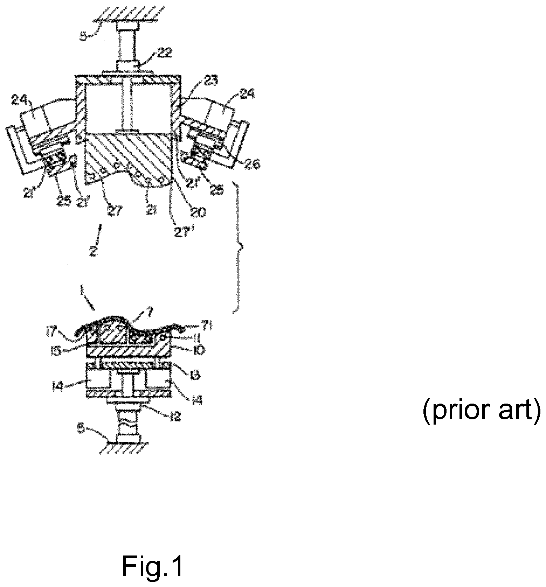

- Fig. 1 is a schematic view of a mould according to the prior art;

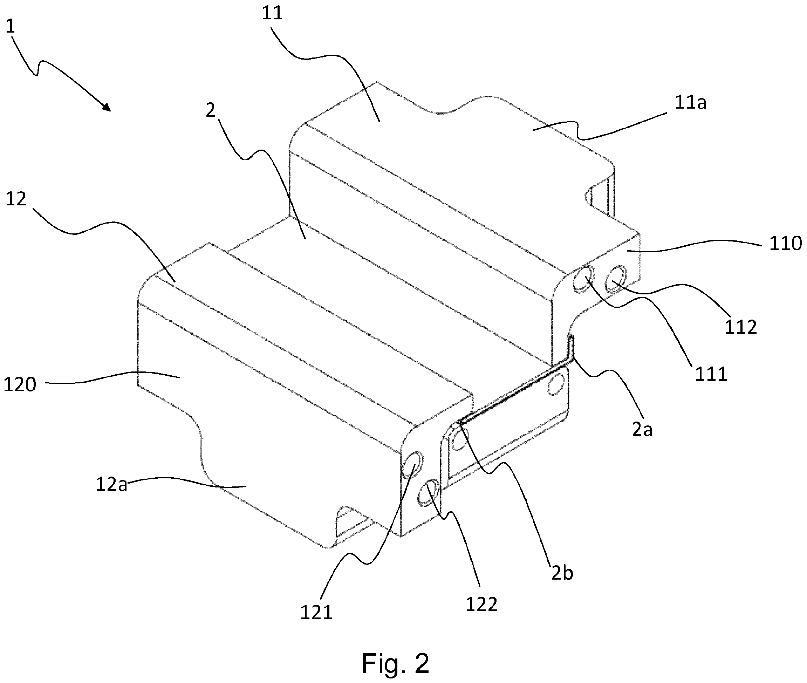

- Fig. 2 is an axonometric top view of a insert assembly of a mould according to the invention;

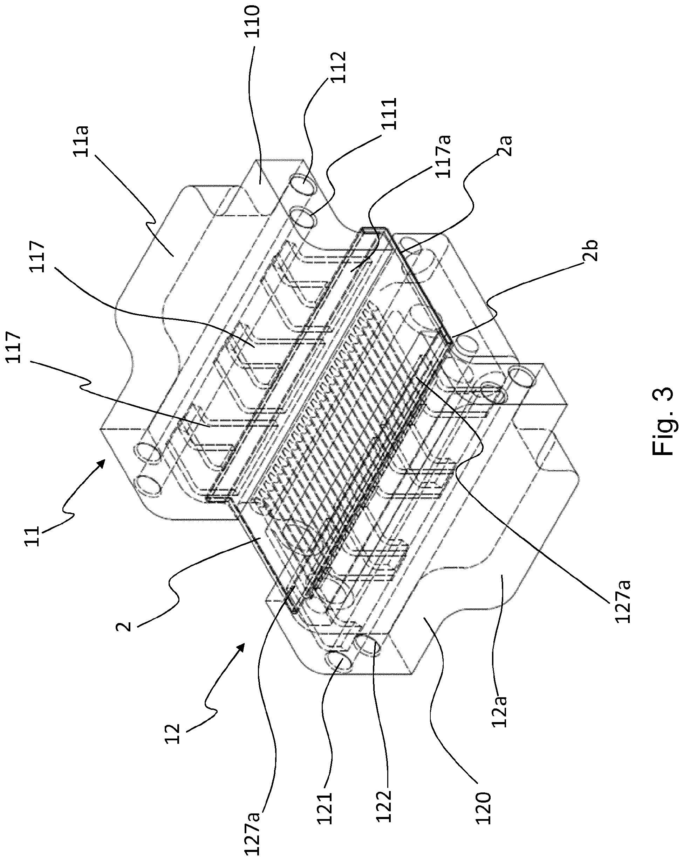

- Fig. 3 is an axonometric view corresponding to that of Fig. 2, with some transparent parts allowing to see the inside of the inserts;

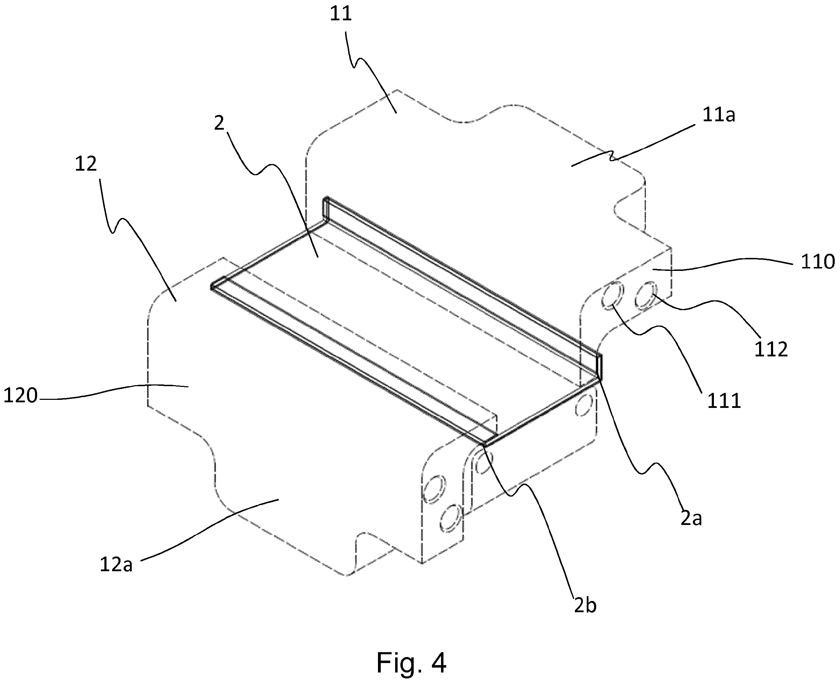

- Fig. 4 shows a piece moulded by using the insert assembly of Figures 2 and 3;

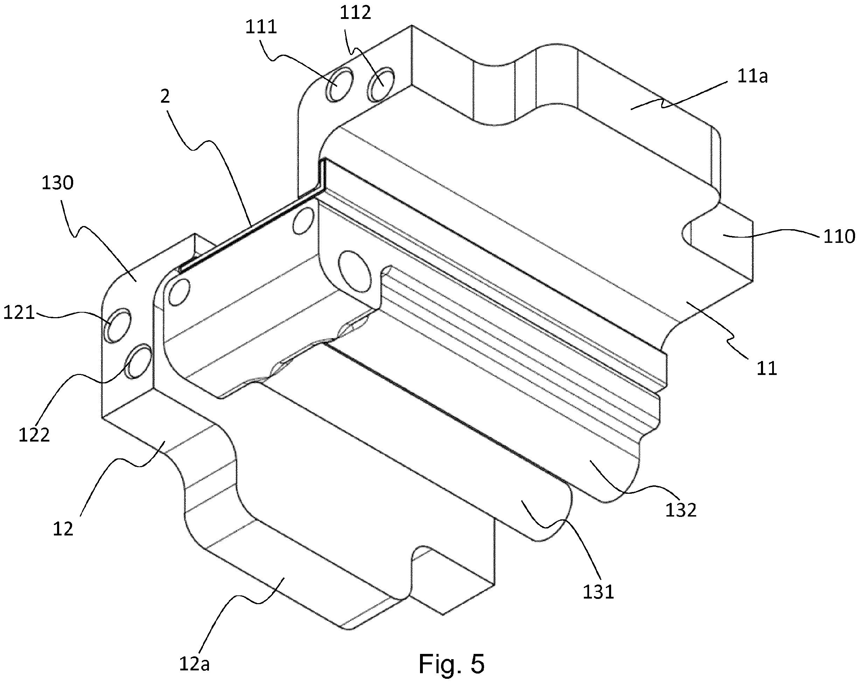

- Fig. 5 is an axonometric bottom view of the insert assembly of Figures 2-4;
- Figs. 6a, 6b respectively show a perspective view and a transparency view of a first insert of the assembly shown in the preceding figures;
- Figs. 7a, 7b respectively show a perspective and a transparency sectional views of the insert of Fig. 6a, 6b;
- Fig. 8 is an axonometric view of another insert of the assembly shown in Figures 2-4;
- Figs. 9 and 10 are, respectively, a top view and a front view of the insert of Fig. 8;
- Fig. 11 is a sectional view along the XI-XI line of Fig. 9;
- Fig. 12 is a transparency axonometric view of the insert of Figs. 8-11;
- Figs. 13a, 13b and 13c show the succession of the hot-cold flow of a fluid circulating in the insert of fig. 8-11 during a coupling cycle;
- Fig. 14 is a diagram that shows the conditioning fluid circuit in the inserts of the preceding figures.

Referring now to the above-listed drawings, numeral 1 designates as a whole an insert assembly of a mould for panel coupling applications according to the invention. For clarity, the parts of the moulds in which the insert assembly 1 is installed have been omitted.

In this regard, before proceeding with a detailed description of the drawings, it is worth pointing out that, for simplicity and clarity, the following will describe the elements of the assembly 1 that are useful for understanding the invention, while the mould in which said assembly is installed will only be taken into account as necessary to allow for full comprehension of the invention.

For further details about thermoforming moulds and panel coupling, reference can be made to the above description of the prior art, as well as to the extensive technical and patent literature on this matter.

Likewise, it is also worth mentioning that the elements of the invention and the configuration or representation thereof as shown in the drawings can be combined as deemed appropriate in one or more embodiments of the invention, the latter not being limited to the exemplary embodiments that will be taken into account herein.

Therefore, in this description any reference to "an embodiment" will indicate that a particular configuration, structure or feature described in regard to an element is comprised in at least one embodiment. Therefore, the phrase "in an embodiment" and other similar phrases, which may be present in different parts of this description, will not necessarily be all related to the same embodiment. Furthermore, any particular configuration, structure or feature may be combined in one or more embodiments in any way deemed appropriate. The references below are therefore used only for simplicity's sake, and do not limit the protection scope or extension of the various embodiments.

The assembly 1 comprises a first insert 11 intended for operating on a bent edge 2a of a piece 2 to be coupled: the latter is a panel having an "L" cross section, even though, of course, the shape and dimensions of the panel may be different from those shown in the drawings. Let us think, for example, of panels with cylindrical or parallelepiped geometry, or the like.

On the panel 2 a coating layer 3 is applied, e.g. made of fabric, leather, briar root or the like, which is hot-fixed by means of thermoactivated adhesives.

The assembly 1 comprises a second coupling insert 12 intended for operating on a corresponding edge 2b of the panel, opposite to the previous one.

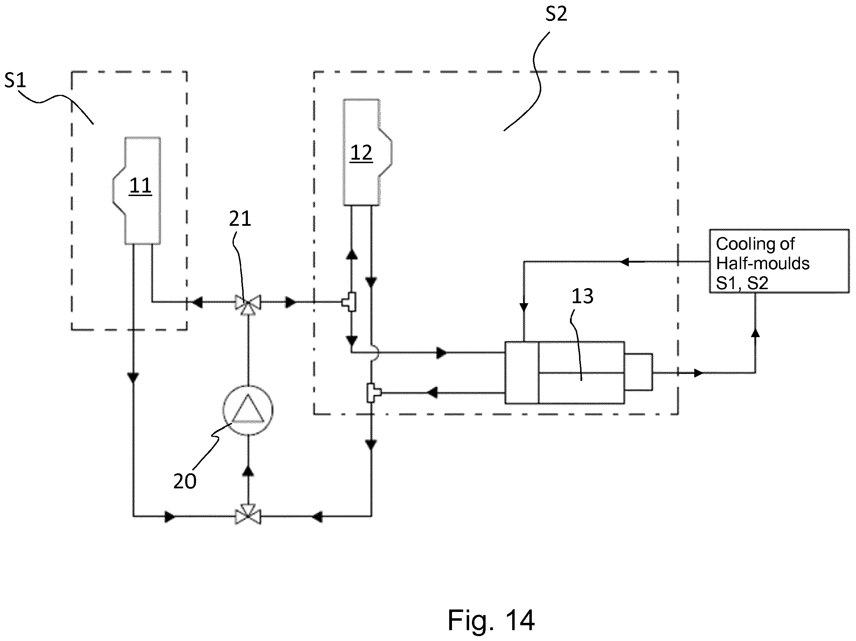

In this case, the edge 2b is flat, but it may of course be bent like the opposite one or otherwise configured. Finally, the assembly 1 comprises a third moulding insert 13, arranged under the flat central part of the panel 2. The inserts 11, 12 and 13 are secured to the half-moulds S1 and S2, schematically drawn with a dashed line in Fig. 14, through per se known mechanical means such as shape couplings, bolts and the like; in this example, the first insert 11 is mounted on the upper half-mould S1, while the inserts 12 and 13 are mounted on the lower half-mould S2, so that, when the half-moulds are closed for the coupling operations, the inserts 1, 12, 13 will be arranged along the edges 2a, 2b and the central part of the piece 2 to be coupled, as shown in the drawings.

In this respect, it must be pointed out that the inserts 11, 12, 13 must anyway be so designed and installed as to attain perfect sealing between the channels for the flow of the thermal conditioning liquid in the half-moulds and those in the inserts, as will be further explained below. Therefore, depending on the shape and dimensions of the inserts, which in turn depend on those of the pieces to be coupled together, gaskets may also be employed between the inserts and the half-moulds to ensure proper sealing.

In this example, the first and third inserts 11 and 12 have respective tangs 11a, 13a, which facilitate their shape coupling to the respective half-moulds S1, S2, in a typical mortise and tenon configuration.

The drawings show the inserts 11, 12 and 13 in transparency, so that one can see also the inside thereof and the path followed by the fluid.

As can be seen, the inserts 11 and 12 are similar, and therefore, even though reference will be made below, for brevity's sake, only to the first one of them, the following explanation will apply to the second one as well.

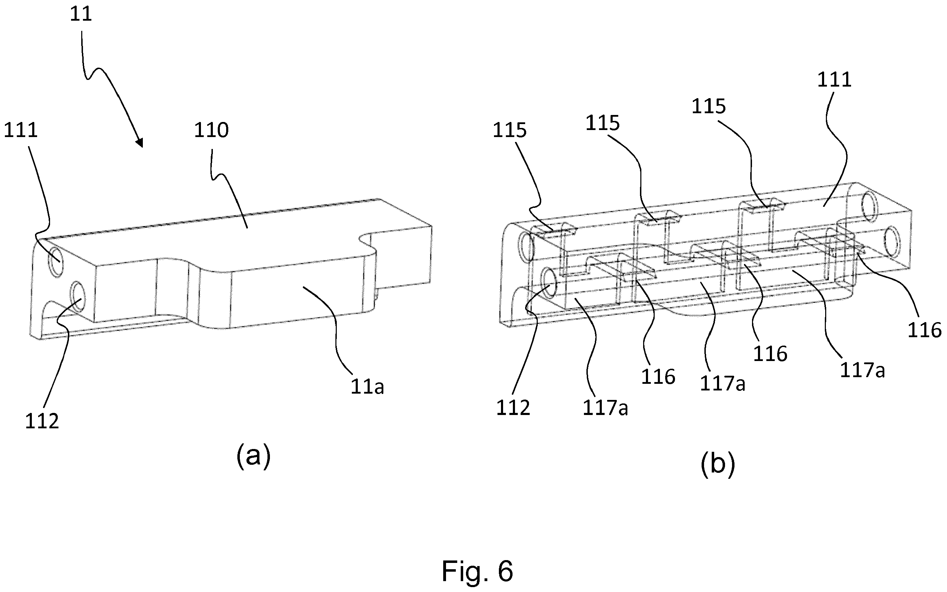

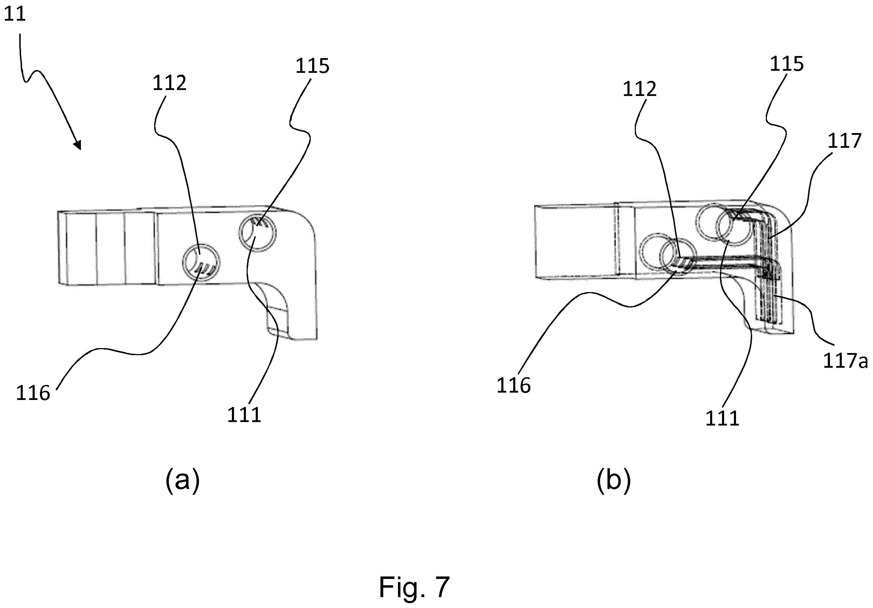

The insert 11 has a body 110 that, in accordance with a preferred embodiment, is made of sintered metal material; the body 110 substantially has an "L" cross-section, as shown in detail in Figures 6 and 7, and is crossed longitudinally by two channels 111, 112, in which the thermal conditioning fluid flows in opposite directions. Inlet ports 115 and outlet ports 116 are respectively formed for the fluid on the walls of the channels 111, 112, matching respective transfer ducts 117 for the channels 111, 112.

The transfer ducts 117 advantageously have a flat shape, preferably a rectangular cross-section, so that there is a central portion 117a that extends along the end of the "L" section of the insert 110, near the bent edge 2a of the panel 2 to be coupled.

As aforesaid, similar features are also present in the second insert 120, which is longitudinally crossed by two channels 121, 122 for the thermal conditioning fluid. Along the channels 121, 122, transfer ducts 127 are arranged which connect the inlet port 125 and outlet port 126; the transfer ducts 127 have a central portion 127a that, in the operating condition shown in the drawings, extends along the end of the body 120 of the insert 12 that is located near the edge 2b of the panel 2 to be coupled.

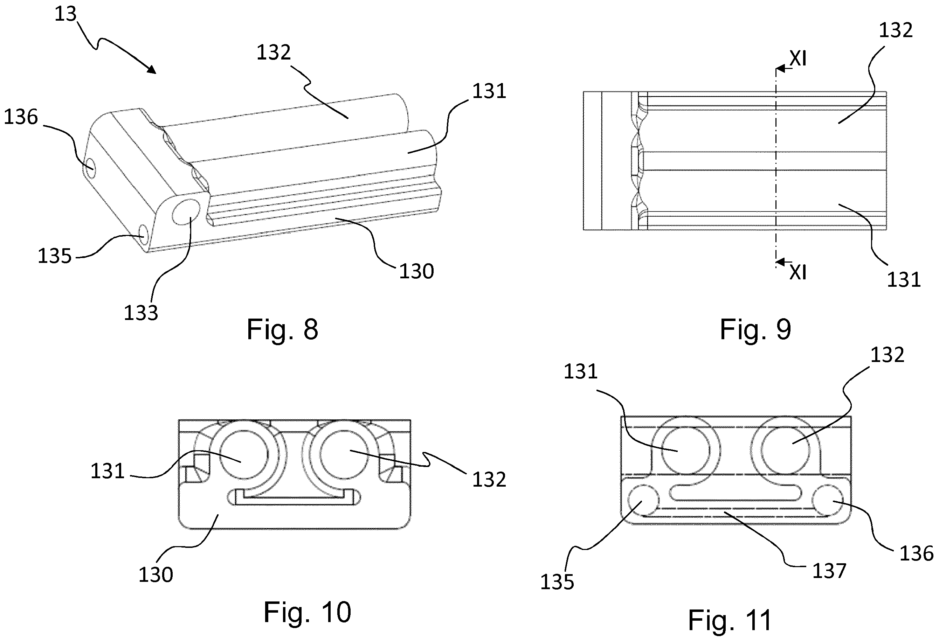

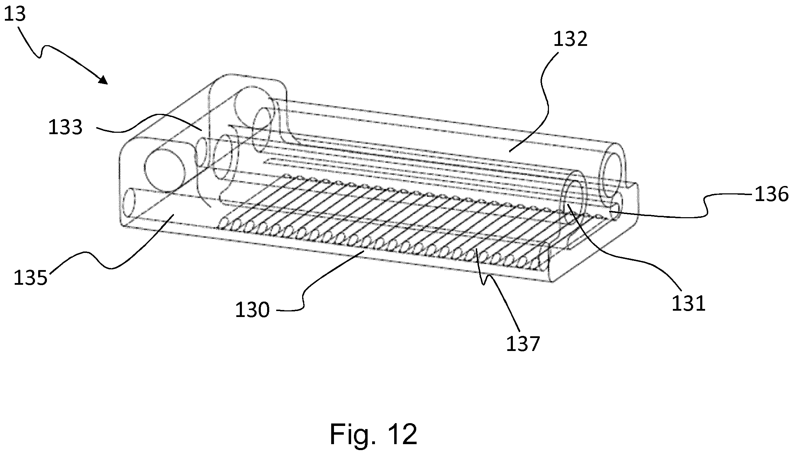

The third insert 13 is arranged under the flat central region of the panel 2, and is shown in detail in Figures 8-12.

It comprises a body 130, in which main channels 131, 132 are formed for the flow of thermal conditioning liquid, which is fed into the insert 13 through an inlet hole 133. On a different level with respect to the main channel 131, 132, secondary channels 135, 136 are provided in the insert 13 for the circulation of thermal conditioning fluid within a series of microchannels 137 extending between the two secondary channels 135, 136.

The thermal conditioning fluid is typically water, although it may be something else, possibly with some additives dissolved into it, and, depending on the processing step to be carried out, it can be either hot or cold.

The hydraulic circuit for the conditioning liquid is illustrated in the diagram of Figure 14.

As can be seen, the liquid delivered by a pump 20 is distributed by a three-way valve 21 to two branches, respectively associated with the half-moulds S1 and S2: in the first branch there is the first insert 11, whereas in the other branch of the circuit there are the second and third inserts 12, 13.

The circuit is independent of the main thermal conditioning circuit of the half-moulds S1, S2; it is thus possible to heat up or cool down the inserts 11, 12, 13 in a short time, since they have much smaller dimensions and weights than the half-moulds.

In particular, thanks to the configuration of the inserts and to the path followed therein by the liquid along the transfer ducts 117a, 127a and the microchannels 137a, the inserts 11, 12, 13 can be heated at points very close to the panel 2 to be coupled.

It follows that the latter is heated and cooled in an efficient manner and, most importantly, in short times, so that a much higher number of moulding cycles can be carried out, all other conditions being equal, than with a prior-art mould.

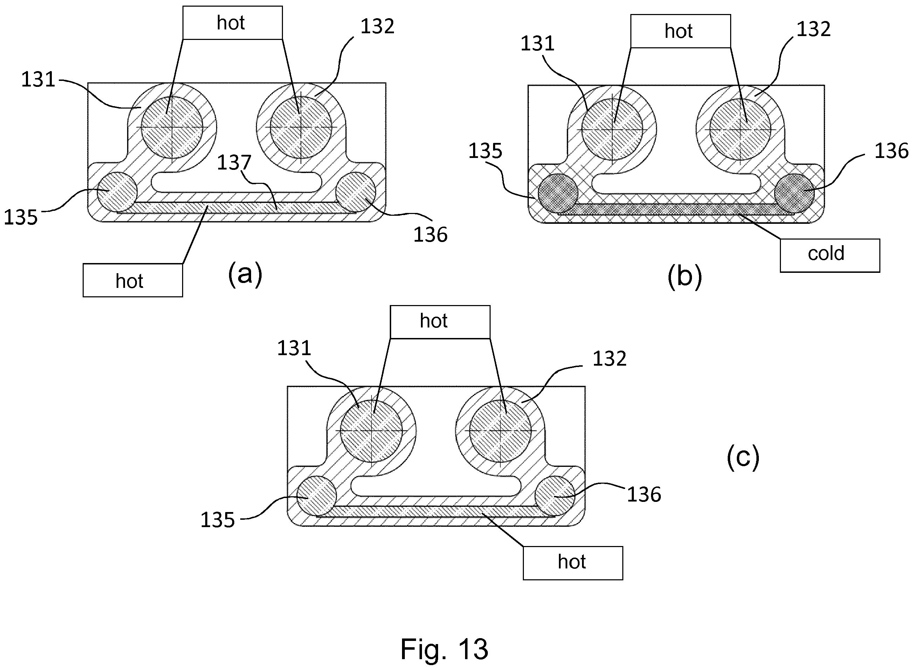

This situation can be better appreciated by looking at Figures 13(a), 13(b), 13(c), which show the succession of the hot-cold flow of the fluid circulating in the third insert 13 during a coupling cycle.

As can be seen, in the first drawing there is hot fluid flowing in all channels 131, 132 and 135, 136, 137: this is the step wherein the panel 2 is heated up in order to activate the glues for fixing the coating layer 3.

Then, prior to removing the piece 2 from the mould, cold fluid is supplied into the inserts 11, 12 and 13; in the inserts 11 and 12 the cold fluid flows in the channels 111, 112 and 121, 122 and the respective transfer ducts 117 and 127, whereas in the third insert 13 the cold fluid only flows in the secondary channels 135, 136 and in the microchannels 137, while the main channels are still fed with hot fluid.

As a result, according to the invention, those regions of the mould and/or of its half-moulds S1 and S2 which are farther from the piece being processed are kept at a substantially constant temperature, while those regions which are closer to the piece being processed are subjected to heating and cooling cycles in order to allow performing the coupling operation and removing the panels. It is for this reason that the inserts 11, 12, 13 are located in the regions that are closest to the piece being processed, since such inserts can be thermally conditioned independently of the rest of the mould.

This promotes a reduction of the mass to be heated and cooled, leading to a corresponding reduction of the heating and cooling cycle times without affecting the coupling conditions.

In addition, it must be pointed out that the mould of the invention allows heating and cooling the critical points of the mould, i.e. those in contact with or very close to the piece being processed; in this context, the inserts 11, 12, 13 can in all respects be considered to be parts of the mould.

The fixing of the coating layer can thus take place with optimal control of the thermal conditions that a piece being processed is subject to.

This is due to the fact that the temperature of the inserts 11, 12, 13 substantially matches, at any time, the temperature of the liquid flowing therein; hence, there will be no significant differences or delays between the variations of such temperatures.

From the above description one can understand how the mould of the invention and the coupling process it performs can solve the technical problem outlined at the beginning.

In fact, as explained above, the temperature of those parts of the mould that are in contact with or closest to the piece 2 to be moulded, i.e. the inserts 11, 12, 13, can be changed more quickly than that of farther parts.

In addition to reducing coupling times, thus increasing the productivity of the mould, this also allows a reduction of production costs, since less energy is required for the mould heating cycles, all other conditions being equal, than for a normal mould.

It must be pointed out, in fact, that in the example considered herein only the inserts 11, 12, 13 are de facto subjected to heating and cooling cycles, while the remaining parts of the mould can be kept at a substantially constant temperature.

It is in fact understandable that the shape, number and dimensions of the inserts 11, 12, 13 may vary from case to case as a function of the shape and dimensions of the piece to be coupled; in the most extreme case, they may even become the two half-moulds themselves.

In other words, it can be stated that the principles of the invention are applicable not only to the inserts, but also to some particular moulds; this is the case, for example, of reflangers having only one conditioning channel, wherein just a single heating and cooling circuit may be present, depending on the shape of the piece.

In such a case, half-moulds S1, S2 will be used which will be made in accordance with the diagram shown herein for the inserts, i.e. incorporating channels, transfer ducts and/or microchannels in which a thermal conditioning fluid can be made to flow independently of the fluid circulating in the rest of the half-mould, so that it will be possible to quickly heat and cool only those regions of the half-moulds which are in contact with the pieces to be processed.

Therefore, moulds may be employed which include one or more inserts, or moulds with no inserts or with a number of inserts greater than three; the inserts may then be designed as necessary, e.g. adapted to a shape of the piece to be moulded which is not flat or which does not have straight edges.

It will also be apparent that, although reference has been made herein to panels for automotive use, the invention is generally applicable to the hot coupling of pieces having any shape, not only of panels for the automotive industry.

## Claims

1. Apparatus for hot coupling and/or edge folding process, wherein a coating layer (3) is fixed onto a piece (2), comprising at least one first and one second half-moulds (S1, S2) between which the piece (2) to be processed is arranged, first means for circulating a thermal conditioning fluid in at least one of the half-moulds (S1, S2), **characterized in that** it comprises inserts (11, 12, 13) associated with said at least one of the half-moulds (S1, S2) so that when the half-moulds are closed for coupling operations, the inserts (11, 12, 13) are arranged along the edges (2a, 2b) and the central part of a piece (2) to be coupled, second means (111, 112, 115-117; 121, 122, 125-127; 131, 132, 135-137) for circulating a thermal conditioning fluid in said inserts (11, 12, 13) in proximity of the regions in contact with a piece (2) being processed, in a manner substantially independent of the rest of the half-mould (S1, S2).

2. Apparatus according to claim 1, wherein, when a piece (2) is arranged between the half-moulds (S1, S2) for being processed, said insert (11, 12, 13) is in contact with at least one part of the piece.

3. Apparatus according to any one of the preceding claims, wherein the means for circulating the thermal conditioning fluid comprise a first and a second channels (111, 112; 121, 122; 135, 136) in fluid communication with each other by means of transfer ducts (117, 127) and/or microchannels (137), which extend at least partly in the regions in contact with the piece (2) to be moulded.

4. Apparatus according to claim 3, wherein the first and second channels (111, 112; 121, 122; 135, 136) are substantially parallel and extend longitudinally relative to the insert (11, 12, 13) and/or to the half-mould (S1, S2).

5. Apparatus according to claims 3 or 4, wherein the first and second channels comprise ports (115, 116) connected to transfer ducts (117, 127) and/or microchannels (137) and the like.

6. Apparatus according to any one of the preceding claims, comprising an insert (11, 12) with a body (110, 120) substantially having an "L" shaped cross section, one end of which is to be juxtaposed to an edge (2a, 2b) of a piece (2) to be coupled.

7. Apparatus according to any one of the preceding claims, comprising an insert (11, 12, 13) provided with means (11a, 12a) for shape coupling with a half-mould (S1, S2) and attachment thereto.

8. A coupling method for application of a coating layer (3) to a piece (2) arranged between thermally conditioned half-moulds (S1, S2), comprising at least one heating step and a successive cooling step of the regions of the coating (3) to be fixed onto the piece (2), which are carried out by thermally conditioning the regions of the half-moulds (S1, S2) in contact with a piece (2) being processed, said half-moulds (S1,S2) comprise at least one insert (11, 12, 13) that is heated and cooled in a manner substantially independent of the rest of the respective half-mould (S1, S2),
**characterized in that**
said heating and cooling steps are carried out by a fluid circulated by second means (111, 112, 115-117; 121, 122, 125-127; 131, 132, 135-137) for circulating a thermal conditioning fluid, in a manner substantially independent of first means for circulating a thermal conditioning fluid in at least one of the half-moulds (S1, S2).

9. Method according to claim 8 or 9, wherein the half-mould (S1, S2) is heated to a substantially constant temperature, whereas the regions of the half-moulds (S1, S2) in contact with a piece (2) being processed are subjected to heating and cooling cycles for processing pieces.

## Patentansprüche

1. Vorrichtung für einen Heißverbindungs- und/oder Randfaltprozess, wobei eine Beschichtungslage (3) auf einem Stück (2) befestigt wird, enthaltend mindestens eine erste und eine zweite Formhälfte (S1, S2), zwischen welchen das zu bearbeitende Stück (2) angeordnet wird, eine erste Einrichtung zum Zirkulieren eines thermischen Konditionierungsfluids in mindestens einer der Formhälften (S1, S2), **dadurch gekennzeichnet, dass** sie mit mindestens einer der Formhälften (S1, S2) in Verbindung stehende Einsätze (11, 12, 13) aufweist, sodass dann, wenn die Formhälften für Verbindungsvorgänge geschlossen werden, die Einsätze (11, 12, 13) entlang den Rändern (2a, 2b) und dem Mittelteil eines zu verbindenden Stückes (2) angeordnet sind,
zweite Einrichtungen (111, 112, 115-117; 121, 122, 125-127; 131, 132, 135-137) zum Zirkulieren eines thermischen Konditionierungsfluids in den Einsätzen (11, 12, 13) in der Nähe der mit einem zu bearbeitenden Stück (2) in Kontakt stehenden Gebiete in einer im Wesentlichen vom Rest der Formhälften (S1, S2) unabhängigen Weise.

2. Vorrichtung nach Anspruch 1, wobei dann, wenn ein Stück (2) zwischen den Formhälften (S1, S2) zur Verarbeitung angeordnet ist, der Einsatz (11, 12, 13) in Kontakt mit mindestens einem Teil des Stückes ist.

3. Vorrichtung nach einem der vorhergehenden Ansprüche, wobei die Einrichtung zum Zirkulieren des thermischen Konditionierungsfluids einen ersten und einen zweiten Kanal (111, 112; 121, 122; 135, 136), die mittels Übertragungsleitungen (117, 127) und/oder Mikrokanälen (137), die sich zumindest teilweise in den mit dem zu formenden Stück (2) in Kontakt stehenden Gebieten erstrecken, miteinander in Fluidverbindung stehen.

4. Vorrichtung nach Anspruch 3, wobei die ersten und die zweiten Kanäle (111, 112; 121, 122; 135, 136) im Wesentlichen parallel sind und sich relativ zu dem Einsatz (11, 12, 13) und/oder zu der Formhälfte (S1, S2) in Längsrichtung erstrecken.

5. Vorrichtung nach Anspruch 3 oder 4, wobei die ersten und die zweiten Kanäle Anschlussöffnungen (115, 116) aufweisen, die mit den Übertragungsleitungen (117, 127) und/oder Mikrokanälen (137) und dergleichen verbunden sind.

6. Vorrichtung nach einem der vorhergehenden Ansprüche, enthaltend einen Einsatz (11, 12) mit einem einen im Wesentlichen einen "L"-förmigen Querschnitt aufweisenden Körper (110, 120), von welchem ein Ende einem Rand (2a, 2b) eines zu verbindenden Stückes (2) gegenüberliegend anzuordnen ist.

7. Vorrichtung nach einem der vorhergehenden Ansprüche, enthaltend einen Einsatz (11, 12, 13), der mit Einrichtungen (11a, 12a) zur Formverbindung mit einer Formhälfte (S1, S2) und Befestigung daran versehen ist.

8. Verbindungsverfahren zur Anbringung einer Beschichtungslage (3) an einem zwischen thermisch konditionierten Formhälften (S1, S2) angeordneten Stück (2), enthaltend mindestens einen Erwärmungsschritt und einen darauffolgenden Kühlungsschritt von auf dem Stück (2) zu befestigenden Gebieten der Beschichtung (3), welche durch thermische Konditionierung der mit einem in Bearbeitung befindlichen Stück (2) in Kontakt stehenden Gebiete der Formhälften (S1, S2) ausgeführt werden, wobei die Formhälften (S1, S2) mindestens einen Einsatz (11, 12, 13) aufweisen, der in einer von dem Rest der jeweiligen Formhälfte (S1, S2) im Wesentlichen unabhängigen Weise erwärmt und gekühlt wird,
**dadurch gekennzeichnet, dass** der Erwärmungs- und der Kühlungsschritt durch ein durch zweite Einrichtungen (111, 112, 115-117; 121, 122, 125-127; 131, 132, 135-137) zum Zirkulieren eines thermischen Konditionierungsfluids zirkuliertes Fluid in einer von einer ersten Einrichtung zum Zirkulieren eines thermischen Konditionierungsfluids in mindestens einer der Formhälften (S1, S2) im Wesentlichen unabhängigen Weise ausgeführt wird.

9. Verfahren nach Anspruch 8 oder 9, wobei die Formhälfte (S1, S2) auf eine im Wesentlichen konstante Temperatur erwärmt wird, wohingegen die mit einem in Bearbeitung befindlichen Stück (2) in Kontakt stehenden Gebiete der Formhälften (S1, S2) Erwärmungs- und Kühlungszyklen zur Bearbeitung von Stücken unterzogen werden.

## Revendications

1. Appareil pour un processus d'accouplement à chaud et/ou de pliage de bord, dans lequel une couche de revêtement (3) est fixée sur une pièce (2), comprenant au moins un premier et un second demi-moules (S1, S2) entre lesquels la pièce (2) à traiter est agencée, des premiers moyens de mise en circulation d'un fluide de conditionnement thermique dans au moins l'un des demi-moules (S1, S2), **caractérisé en ce qu'**il comprend des inserts (11, 12, 13) associés audit au moins un des demi-moules (S1, S2) de sorte que lorsque les demi-moules sont fermés pour des opérations d'accouplement, les inserts (11, 12, 13) sont agencés le long des bords (2a, 2b) et de la partie centrale d'une pièce (2) à accoupler, des seconds moyens (111, 112, 115 à 117 ; 121, 122, 125 à 127 ; 131, 132, 135 à 137) de mise en circulation d'un fluide de conditionnement thermique dans lesdits inserts (11, 12, 13) à proximité des régions en contact avec une pièce (2) traitée, de manière sensiblement indépendante du reste du demi-moule (S1, S2).

2. Appareil selon la revendication 1, dans lequel, lorsqu'une pièce (2) est agencée entre les demi-moules (S1, S2) pour être traitée, ledit insert (11, 12, 13) est en contact avec au moins une partie de la pièce.

3. Appareil selon l'une quelconque des revendications précédentes, dans lequel les moyens de mise en circulation du fluide de conditionnement thermique comprennent un premier et un second canal (111, 112 ; 121, 122 ; 135, 136) en communication fluidique l'un avec l'autre au moyen de conduites de transfert (117, 127) et/ou de microcanaux (137) qui s'étendent au moins en partie dans les régions en contact avec la pièce (2) à mouler.

4. Appareil selon la revendication 3, dans lequel les premier et second canaux (111, 112 ; 121, 122 ; 135, 136) sont sensiblement parallèles et s'étendent longitudinalement par rapport à l'insert (11, 12, 13) et/ou au demi-moule (S1, S2).

5. Appareil selon la revendication 3 ou 4, dans lequel les premier et second canaux comprennent des orifices (115, 116) raccordés à des conduites de transfert (117, 127) et/ou à des microcanaux (137) et similaires.

6. Appareil selon l'une quelconque des revendications précédentes, comprenant un insert (11, 12) avec un corps (110, 120) ayant sensiblement une section transversale en forme de « L », dont une extrémité doit être juxtaposée à un bord (2a, 2b) d'une pièce (2) à accoupler.

7. Appareil selon l'une quelconque des revendications précédentes, comprenant un insert (11, 12, 13) pourvu de moyens (11a, 12a) d'accouplement de forme avec un demi-moule (S1, S2) et d'arrimage à celui-ci.

8. Procédé d'accouplement pour l'application d'une couche de revêtement (3) à une pièce (2) agencée entre des demi-moules (S1, S2) conditionnés thermiquement, comprenant au moins une étape de chauffage et une étape de refroidissement successives des régions du revêtement (3) à fixer sur la pièce (2), qui sont réalisées par le conditionnement thermique des régions des demi-moules (S1, S2) en contact avec une pièce (2) traitée, lesdits demi-moules (S1, S2) comprennent au moins un insert (11, 12, 13) qui est chauffé et refroidi de manière sensiblement indépendante du reste du demi-moule (S1, S2) respectif,
**caractérisé en ce que**
lesdites étapes de chauffage et de refroidissement sont réalisées par un fluide mis en circulation par des seconds moyens (111, 112, 115 à 117 ; 121, 122, 125 à 127 ; 131, 132, 135 à 137) de mise en circulation d'un fluide de conditionnement thermique, de manière sensiblement indépendante de premiers moyens de mise en circulation d'un fluide de conditionnement thermique dans au moins l'un des demi-moules (S1, S2).

9. Procédé selon la revendication 8, dans lequel le demi-moule (S1, S2) est chauffé jusqu'à une température sensiblement constante, tandis que les régions des demi-moules (S1, S2) en contact avec une pièce (2) traitée sont soumises à des cycles de chauffage et de refroidissement pour traiter des pièces.
